# EUROPÄISCHE PATENTANMELDUNG

(11) **EP 0 595 038 A1**
(43) Veröffentlichungstag der Anmeldung: **04.05.1994**
(21) Anmeldenummer: 93115572.5
(22) Anmeldetag: 27.09.1993
(51) Int. Cl.: B29C 47/86

(54) **Folienblaskopf**

(30) Priorität: 28.10.1992 DE 9214648 U; 01.02.1993 DE 9301353 U
(71) Anmelder: Windmöller & Hölscher, D-49516 Lengerich (DE)
(72) Erfinder: Sensen, Klemens, D-49525 Lengerich (DE); Linkies, Jürgen, D-49536 Lienen (DE); Beckmann, Hans-Udo, D-49525 Lengerich (DE); Heyen, Harald, D-49536 Lienen (DE); aus dem Moore, Dieter, D-48477 Hörstel (DE)

(57) **Zusammenfassung**

Die vorliegende Erfindung beschreibt einen Folienblaskopf (10) zur Herstellung von Mehrschicht-Kunststoff-Schlauchfolien (34) mit Leitungssystemen (22) zum Aufteilen der Schmelzeströme jeder zu extrudierenden Schicht auf Umfang eines zu einem Düsenspaltringraumes (30). Derartige Folienblasköpfe werden verwendet für die Herstellung von mehrschichtigen Folien beispielsweise für die Verwendung in der Lebensmittelindustrie. Um bei derartigen Folienblasköpfen eine individuelle thermische Behandlung der einzelnen Schmelzeströme erreichen zu können, wird vorgeschlagen, daß die Rohrleitungssysteme für die Schmelzeströme in jeweils voneinander getrennten zueinander konzentrisch angeordneten Zylinderschalen (24) angeordnet sind, wobei die einzelnen Zylinderschalen voneinander durch eine thermische Trennschicht (26) getrennt sind.

## Beschreibung

Die Erfindung betrifft einen Folienblaskopf zur Herstellung von Mehrschicht-Kunststoff-Schlauchfolien mit Leitungssystemen zum Aufteilen der Schmelzeströme jeder zu extrudierenden Schicht auf Umfang eines zu einem Düsenspalt führenden Ringraumes.

Ein derartiger Folienblaskopf ist beispielsweise aus der DE 21 05 756 A1 bekannt. Dort erfolgt die Aufteilung der Schmelze über Rohrleitungen, die für alle Schmelzeströme für die jeweiligen Schichten der Mehrschicht-Kunststoff-Schlauchfolie in einem gemeinsamen, mit einem festen, flüssigen oder gasförmigen Wärmeübertragungsmedium gefüllten Körper, eingeschlossen sind. Hierdurch ist es bedingt, daß die einzelnen Schmelzeströme innerhalb des die Rohrleitungen umschließenden Körpers thermisch gleich behandelt werden, da ja die Schmelzeführung in allen Fällen in dem gleichmäßig temperierten Körper stattfindet. Bei diesem vorbekannten Folienblaskopf haben die Leitungssysteme darüber hinaus große Oberflächen. Sie führen auch zu hohen Druckverlusten.

Aufgabe der Erfindung ist es daher, einen gattungsgemäßen Folienblaskopf derart weiterzubilden, daß er eine individuelle thermische Behandlung der einzelnen Schmelzeströme zuläßt.

Erfindungsgemäß wird diese Aufgabe ausgehend von einem gattungsgemäßen Folienblaskopf durch die Merkmale des kennzeichnenden Teils des Hauptanspruchs gelöst. Demnach sind die Rohrleitungssysteme für die Schmelzeströme jeweils in voneinander getrennten und zueinander konzentrisch angeordneten Zylinderschalen angeordnet. Die Zylinderschalen sind voneinander durch eine thermische Trennschicht getrennt. Zur Beheizung der Zylinderschalen können am Umfang verteilt Heizstäbe angeordnet sein. Bei genügendem Abstand der Zylinderschalen voneinander können aber auch Heizbänder um die einzelnen Zylinderschalen von innen oder außen gelegt werden. Damit ist es möglich, jede Zylinderschale getrennt zu beheizen und unterschiedliche Temperaturen einzustellen.

In einer besonders vorteilhaften Ausführungsform der Erfindung bestehen die thermischen Trennschichten zwischen den einzelnen Zylinderschalen einfach aus kleinen Luftspalten.

Die Heizstäbe jeder Zylinderschale können getrennt beheizbar sein.

Pro Zylinderschale können besonders vorteilhaft vier Heizstäbe gleichmäßig am Umfang angeordnet sein. Diese Heizstabzahl hat sich bei entsprechenden Versuchen als ausreichend erwiesen.

Weitere Einzelheiten und Vorteile der Erfindung werden anhand eines in der Zeichnung dargestellten Ausführungsbeispiels näher erläutert. Es zeigen:
- Fig. 1:: einen schematischen Längsschnitt durch einen Folienblaskopf gemäß einer Ausführungsform der Erfindung und
- Fig. 2:: einen Schnitt durch eine Abwicklung einer Zylinderschale des in Fig. 1 dargestellten Folienblaskopfes.

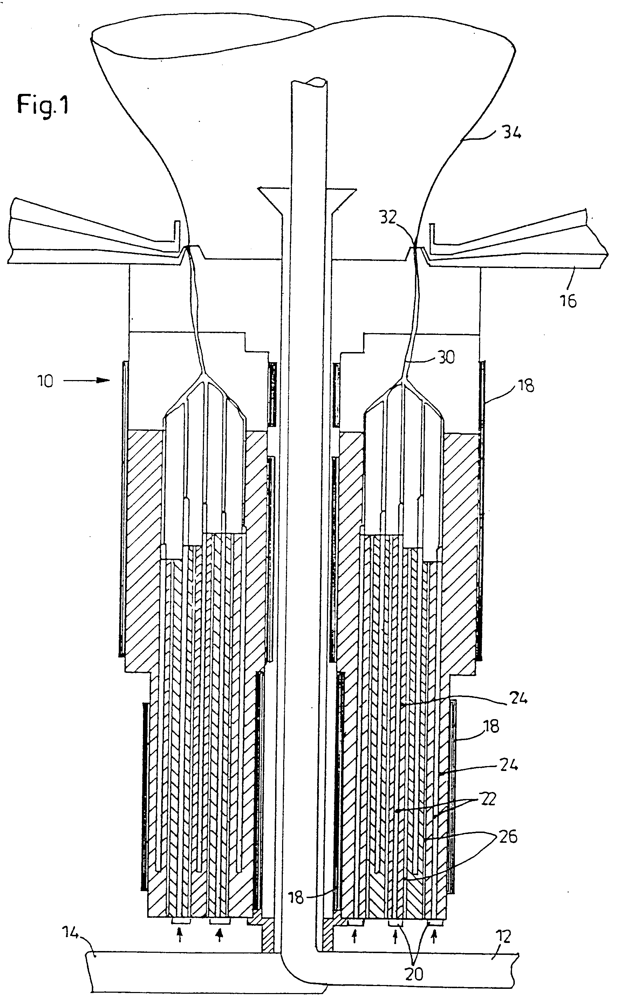

Der in Fig. 1 dargestellte Folienblaskopf weist eine Innenkühlung mit einem Zuführungsrohr 12 und einem zu diesem konzentrisches Auslaßrohr 14 für die Innenkühlluft auf. Mit 16 ist ein schematisch und nur teilweise dargestellter Außenkühlluftring bezeichnet. Der Folienblaskopf weist in ebenfalls bekannter Art und Weise mehrere Heizbänder 18 zum Aufheizen auf die Betriebstemperatur auf. Dem hier dargestellten Folienblaskopf werden von fünf nicht näher dargestellten Extrudern Schmelzeströme für fünf Schichten der herzustellenden Kunststoff-Schlauchfolie zugefördert. Die Schmelzeströme werden über entsprechende Anschlußstücke 20 in Pfeilrichtung in die einzelnen Leitungssysteme 22 geleitet. Die Leitungssysteme sind für jeden einzelnen Schmelzestrom für sich in einer Zylinderschale 24 angeordnet. Die Zylinderschalen 24 sind zueinander konzentrisch angeordnet und sind voneinander jeweils durch einen Luftringspalt 26 getrennt. Dieser Luftringspalt 26 dient jeweils zur thermischen Trennung.

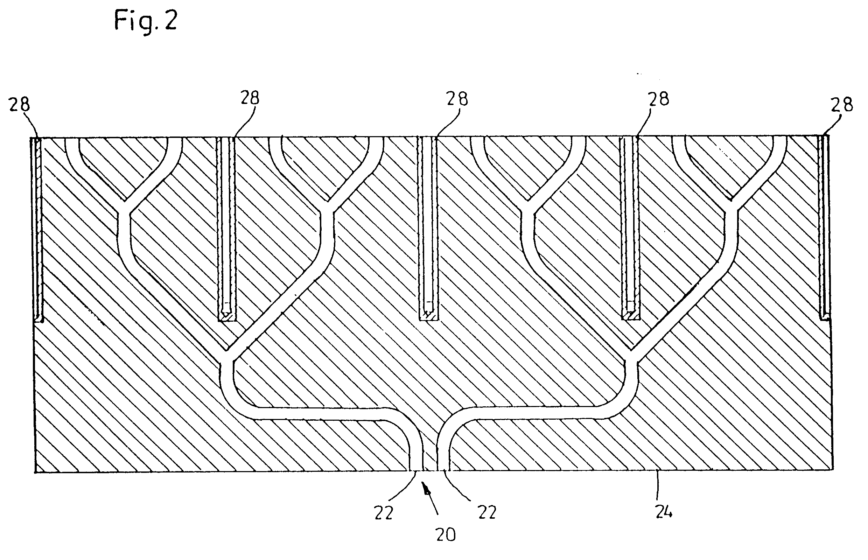

In der in Fig. 2 dargestellten Abwicklung einer Zylinderschale 24 ist der Verlauf des sich verzweigenden Leitungssystems 22 dargestellt. Hier ist deutlich zu sehen, daß sich der Verlauf des Leitungssystems 22 vom hier nur durch die Positionszahl 20 angedeuteten Anschlußstück ausgehend verzweigt. Hierdurch wird eine gleichmäßige Verteilung des Schmelzestroms auf den Umfang erreicht. In der in Fig. 2 geschnitten dargestellten Abwicklung der Zylinderschale sind vier elektrisch beheizbare Heizstäbe 28 zu erkennen, die für jede Zylinderschale 24 separat beheizbar sind.

Die einzelnen Schmelzeströme werden in einem Ringraum 30 miteinander vereinigt und einem Düsenspalt 32 zugeführt, der die in diesem Fall fünfschichtige Kunststoff-Schlauchfolie 34 ausformt.

Es ist möglich, die Zylinderschalen 24 entsprechend der einzeln abgehenden Bohrungen zu takten, so daß die Position des einspeisenden Extruders nahezu beliebig ist. Durch einfaches Takten der entsprechenden Zylinderschale 24 kann ein anderer Extruder die entsprechende Schicht einspeisen.

Mit dem erfindungsgemäßen Folienblaskopf kann die Temperaturführung für jeden Schmelzestrom separat erfolgen. Die Schichtfolge kann an jede beliebige Extruderaufstellung problemlos angepaßt werden. Genauso gut ist der Wechsel der Schichtfolge bei fest vorgegebener Extruderaufstellung möglich. Bei dem hier im Ausführungsbeispiel vorgestellten jeweils in den Zylinderschalen 24 verlaufenden Leitungssystem ist die schmelzeführende Oberfläche vergleichsweise klein, so daß einerseits nur wenig Schmelze anhaftet und andererseits die Schmelze nur gering belastet wird.

## Patentansprüche

1. Folienblaskopf zur Herstellung von Mehrschicht-Kunststoff-Schlauchfolien mit Leitungssystemen zum Aufteilen der Schmelzeströme jeder zu extrudierenden Schicht auf Umfang eines zu einem Düsenspalt führenden Ringraumes,
**dadurch gekennzeichnet**,
daß die Rohrleitungssysteme für die Schmelzeströme in jeweils voneinander getrennten zueinander konzentrisch angeordneten Zylinderschalen angeordnet sind,
daß die einzelnen Zylinderschalen voneinander durch eine thermische Trennschicht getrennt sind.

2. Folienblaskopf nach Anspruch 1, dadurch gekennzeichnet, daß in jeder Zylinderschale am Umfang verteilt Heizstäbe angeordnet sind.

3. Folienblaskopf nach Anspruch 1 oder 2, dadurch gekennzeichnet, daß die thermische Trennschicht ein Luftspalt ist.

4. Folienblaskopf nach Anspruch 1-3, dadurch gekennzeichnet, daß die Heizstäbe jeder Zylinderschale getrennt beheizbar sind.

5. Folienblaskopf nach einem der Ansprüche 1-4, dadurch gekennzeichnet, daß in jeder Zylinderschale jeweils 4 Heizstäbe gleichmäßig am Umfang angeordnet sind.
